(19)

Europäisches
Patentamt
European
Patent Office
Office européen
des brevets

(11) **EP 3 771 996 A1**

(12) **EUROPEAN PATENT APPLICATION**

(43) Date of publication:
**03.02.2021 Bulletin 2021/05**

(51) Int Cl.:
***G06F 16/33*** *(2019.01)*

(21) Application number: **19305984.7**

(22) Date of filing: **29.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Universite Toulouse Jean Jaures
31058 Toulouse Cedex 9 (FR)**
• **UNIVERSITE PAUL SABATIER TOULOUSE III
31062 Toulouse Cedex 9 (FR)**

• **Centre National de la Recherche Scientifique
75016 Paris (FR)**

(72) Inventors:
• **MOTHE, Josiane
31062 TOULOUSE CEDEX 9 (FR)**
• **ULLAH, Zia Md
31062 TOULOUSE CEDEX 9 (FR)**

(74) Representative: **Marks & Clerk France
Immeuble "Visium"
22, avenue Aristide Briand
94117 Arcueil Cedex (FR)**

(54) **INFORMATION RETRIEVAL DEVICE AND METHOD USING A SET OF SEARCH
CONFIGURATIONS PRE-SELECTED USING EFFICIENCY AND RISK FUNCTIONS**

(57)    The invention relates to the definition of a set of candidate Information Retrieval (IR) search configurations that may be used by an IR system to respond to queries. The candidate search configurations are selected among all possible configurations, as the configuration that optimizes a gain function. The gain function is increasing with a reward function and decreasing with a risk function.

FIG.3

EP 3 771 996 A1

**Description**

FIELD OF THE INVENTION

The present invention relates to the field of Information Retrieval (IR). More specifically, the invention relates to the selection of an optimal set of candidate search configurations for Information Retrieval.

BACKGROUND PRIOR ART

Information Retrieval (IR) consists in retrieving information queried by a user among a vast amount of information. IR applies to a wide number of systems, such as search engines, or retrieval of information in large databases. IR systems therefore allow users to retrieve documents, web pages, etc. that correspond to their queries.

IR systems perform queries to retrieve pieces of information, and present them to users. The queries may usually be performed using retrieval models that takes into input a number of arguments (i.e maximum number of expected documents, number of expected terms, etc.). The model and arguments therefore define a large number of possible configurations for evaluating the queries (usually a plurality of thousands possible configurations). Each configuration provides different results: it may select different documents and/or present to the user the documents in different orders.

The performance of an IR system may vary significantly according to the configurations that have been selected for a given query. However, the optimal configurations are not necessarily the same for each query. One objective of IR systems is therefore to be able to select, for each query, an IR search configurations that will provide results as good as possible to the user.

A number of solutions have already been proposed to this problem. For example, Deveaud, R., Mothe, J., & Nie, J. Y. (2016, October). Learning to rank system configurations. In Proceedings of the 25th ACM International on Conference on Information and Knowledge Management (pp. 2001-2004). ACM discloses an IR system that rank search configurations according to the configurations that optimize the relevance of the output of the queries. However, the system disclosed by Deveaud et al. provides an unbounded number of relevant configurations. If the number of selected relevant configurations is high, it may be impractical to select the best configurations among the relevant configurations for a given query.

A critical problem is that the training of the system requires the evaluation of each training query with all the possible configurations, which is impossible to do in case a high number of parameters and possible values are taken into account. This fact strongly hinders the applicability of the approach in practice, especially when the system has to be regularly updated as for commercial search engines.

In addition, as the training queries are usually limited, selecting a configuration among a huge number of possible ones may easily lead to overfitting.

There is therefore the need for an IR system that uses a limited number of search configurations, while being able to select, among said limited number of search configurations, a search configuration that provides good results for the vast majority of the possible queries.

SUMMARY OF THE INVENTION

To this effect, the invention discloses a device comprising: at least one input port configured to receive an Information Retrieval (IR) query; an access to at least one data storage storing a set of candidate IR search configurations; at least one processing logic configured to: select a search configuration in said set of candidate search configurations according to the query; trigger the execution of the query using the selected search configuration; wherein said the candidate search configurations in said set of candidate search configurations have been selected as the search configurations in a set of possible search configurations that maximize a gain function increasing with a reward function and decreasing with a risk function.

Advantageously, the reward and the risk functions are calculated based on comparisons between performances of a possible configuration and a reference configuration on a query training set ($Q_T$).

Advantageously, the risk function is the sum, for each query of the query training set, of a comparison between the performance of the reference configuration and of the possible configuration divided by the size of the query training set, when said comparison is positive if the reference configuration performs better than the possible configuration.

Advantageously, the reward function is the sum, for each query of the query training set, of a comparison between the performance of the reference configuration and of the possible configuration divided by the size of the query training set, when said comparison is positive if the possible configuration performs better than the reference configuration.

Advantageously, the candidate configurations are added to the set of candidate configurations over successive iterations, and the reward and risk functions are calculated by comparing the performances on a query training set ($Q_T$)

of a possible configuration to the performances of the candidate configurations of the set of candidate configurations at the output of the preceding iteration ($S_{k-1}$).

Advantageously, the risk function is the sum, for each query of the query training set, of a comparison between the performances of the candidate configurations of the set of candidate configurations at the output of the preceding iteration and the performances of the possible configuration divided by the size of the query training set, wherein said comparison is positive if at least one candidate configuration performs better than the possible configuration.

Advantageously, the comparison is a maximum between 0 and the maximum of the differences between the performances of each candidate configuration, and the performance of the possible configuration for a query of the query training set.

Advantageously, the comparison is equal to 1 if at least one configuration in the set of candidate configurations performs better than the possible configuration, and 0 otherwise.

Advantageously, the reward function is the sum, for each query of the query training set, of a comparison between the performances of the candidate configurations of the set of candidate configurations at the output of the preceding iteration and of the possible configuration divided by the size of the query training set, when said comparison is positive if the possible configuration performs better than all the candidate configurations.

Advantageously, the comparison is a maximum between 0 and the difference between the performance of the possible configuration, and the maximum of the performances of each candidate configuration for a query.

Advantageously, the comparison is equal to 1 if at least one configuration in the set of candidate configurations performs better than the possible configuration, and 0 otherwise.

Advantageously, the set of possible configurations comprises all the possible combinations a set of parameter values comprising one or more of: an IR model selected in a list comprising one or more of BB2, BM25, DFree, DirichletLM, HiemstraILM, InB2, InL2, JsKLs, PL2, DFI0, XSqrAM, DLH13, DLH, DPH, IFB2, TFIDF, InexpB2, DFRBM25, LGD, LemurTFIDF, InexpC2; a QE model selected in a list comprising one or more of No, KL, Bo1, Bo2, KLCorrect, Information, KLComplete; a number of documents used in QE selected in a list comprising one or more of the numbers 2, 5, 10, 20, 50, 100; a number of expansion terms selected in a list comprising one or more of the numbers 2, 5, 10, 15, 20; a minimum number of documents selected in a list comprising one or more of the numbers 2, 5, 10, 20, 50.

The invention also discloses a method comprising: receiving an Information Retrieval (IR) query; selecting a search configuration in said a set of candidate IR search configurations according to the query; triggering the execution of the query using the selected search configuration; wherein said the candidate search configurations in said set of candidate search configurations have been selected as the search configurations in a set of possible search configurations that maximize a gain function increasing with a reward function and decreasing with a risk function.

The invention also discloses a computer program product comprising a non-transitory computer-readable storage medium, and a non-transitory computer-readable storage medium, causes the one or more processors to: receiving an Information Retrieval (IR) query; selecting a search configuration in said a set of candidate IR search configurations according to the query; triggering the execution of the query using the selected search configuration; wherein said the candidate search configurations in said set of candidate search configurations have been selected as the search configurations in a set of possible search configurations that maximize a gain function increasing with a reward function and decreasing with a risk function.

BRIEF DESCRIPTION OF THE DRAWINGS

The invention will be better understood and its various features and advantages will emerge from the following description of a number of exemplary embodiments and its appended figures in which:

- figure 1 displays a schematic of an IR system, in which the invention may be implemented;
- figure 2 displays an example of the effectiveness of 3 configurations for a number of queries;
- figure 3 displays an example of a device according to the invention.

DETAILED DESCRIPTION OF THE INVENTION

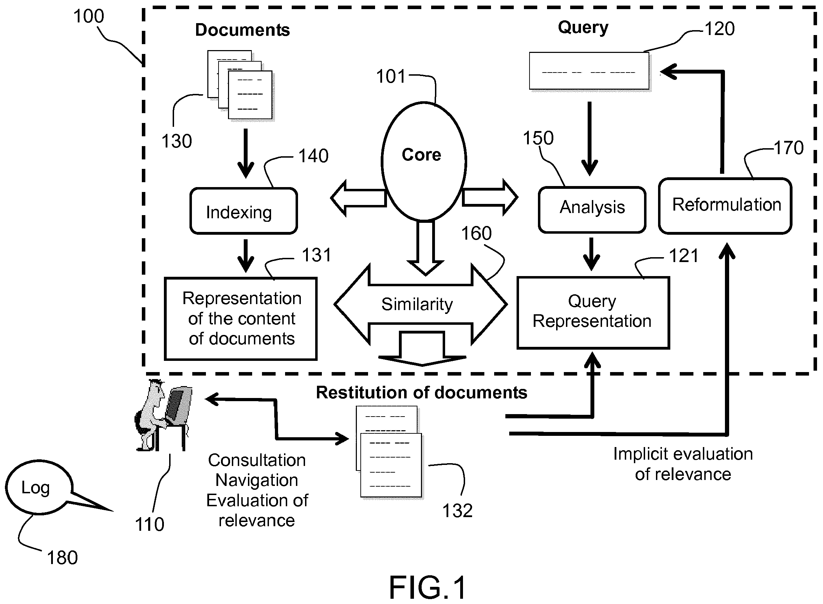

Figure 1 displays a schematic of an IR system, in which the invention may be implemented.

The IR system 100 allows a user 110 to perform a query 120 to search information within a document collection 130. The query can for example be formed by keywords, but also images, etc. More generally, any information that allows a user to express the information he/she is interested about can be integrated in queries.

The documents 130 can be of various types depending on the type of IR system. For example, the documents 130 may be web pages if the IR system 100 is a web search engine.

The IR system 100 comprises an IR core 101 that performs different functions.

The IR core 101 performs an indexing 140 of the documents 130. This indexing consists in providing, for each of the documents 130, a representation 131 of the contents of the documents, for example by defining keywords for the documents. The indexing may take into account the words present in each document, but also their relative occurrences, group words that belongs to the same semantics fields or have the same meaning, word embedding etc... This are example of what can be taken into account when considering textual documents, but other characteristics may also be taken into account, especially of other types of documents, such as images for example.

The core 101 is also able to perform an analysis 150 of the query 120. The analysis 150 allows transforming the query 120 into a query representation 121 that is expressed in a way similar to the representation of the content of the documents 131, that is to say using the same keywords, or more generally in a form that allows a comparison.

Then the core 101 determines a similarity 160 between the query 121 and the representations of the documents 131 as well as a ranking function. At the output of the similarity calculation 160, a list of result documents 132 is outputted to the user 110. The similarity calculation 160 therefore both aims at identifying the documents that best match the query, and showing the documents in a defined order to the user 110, by showing the documents that are considered as the most relevant first. For example, if the IR system 100 is a web search engine, this consists in determining the web pages that are relevant, and showing the most relevant on the first page of results.

When the user 110 sees the output results, he/she may reformulate 110 the query, for example in order by adding or modifying keywords in order to obtain more accurate results. The core 101 can also embed an automatic query reformulation module 170.

As explained above, the calculation of similarity 160 may be performed using a large number of configurations, defined by different search models and search parameters within the various described functions (140, 150, 160, 170). The configurations may provide more or less accurate results depending upon the queries. One of the aims of the invention is to provide a limited set of search configurations, which however allows obtaining accurate results in most cases.

Logs 180 that are stored from past queries, and may be analyzed and used afterwards to optimize the core 101 functions.

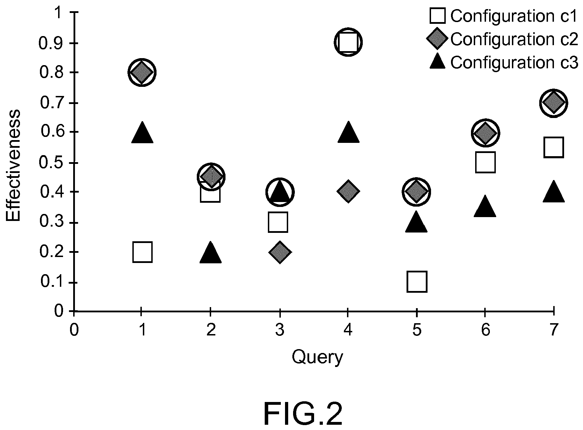

Figure 2 displays an example of the effectiveness of 3 configurations for a number of queries.

Figure 2 shows, in the horizontal axis, 7 queries, and, in the vertical axis, a measure of effectiveness (or performance), ranging from 0 (less effective), to 1 (more effective). Three configurations are tested: a first configuration c1 (squares), a second configuration c2 (diamonds), and a third configuration c3 (triangles). In this example, the three configurations correspond to "LM", "BM25" and "Bo2" models. These models are used for example for the similarity calculation 160.

The effectiveness of each configuration for each query is calculated, and displayed in the graph. The effectiveness of the configuration c1 is represented for each query by the squares, the effectiveness of query c2 by diamonds, and the effectiveness of query c3 by triangles. The effectiveness of a configuration for a query can be calculated in different ways. Indeed, many metrics are known for evaluating the effectiveness of a configuration for a query, such as precision, recall, Fall-out, F-score, etc. A number of effectiveness measurements are for example introduced by Croft, W. B., Metzler, D., & Strohman, T. (2010). Search engines: Information retrieval in practice (Vol. 520). Reading: Addison-Wesley. Chapter 8.

For each query, the configuration that performs better is circled. As shown in figure 2, the configuration c2 performs better for queries 1, 2, 5, 6 and 7, while the configuration c3 performs better for query 3, and configuration c1 performs far better for query 4.

This example highlights that the best configurations is not always the same for each query. Therefore, a general objective of IR consists in optimizing the configuration for queries. This is generally performed by state of art search engines by identifying a single configuration which provides good overall results, and use this single configuration for all the queries. However, as shown above, a single configuration may provide poorly on some queries.

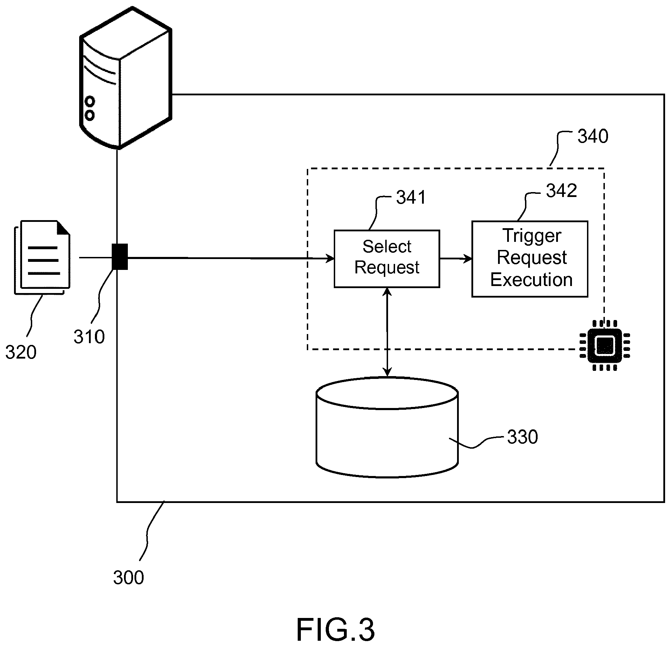

Figure 3 displays an example of a device according to the invention.

The device 300 may take various forms of computing device. For example, the device 300 may be a server or a cluster.

The device 300 comprises at least one input port 310 configured to receive an IR query 320. The query 320 may be received in a number of ways, for example through an internet connection.

The device 300 comprises an access to at least one data storage 330. The data storage may be any kind of computer-readable data storage, such as a non volatile memory, hard drive, an optical disk, etc. Although being represented in the device 300 in the figure 3, the data storage may be accessed remotely. For example, the data storage may be located in another server of the same server farm, and be accessed by the device 300 remotely through a network connection.

The data storage 330 stores a set of candidate IR search configurations. A configuration can be defined by one or more elements expressing how the documents are searched. For example, a configuration may be defined by one or more of:

- a retrieval model (for example, the models BB2, BM25, DFree, DirichletLM, HiemstraILM, InB2, InL2, JsKLs, PL2, DFI0, XSqrAM, DLH13, DLH, DPH, IFB2, TFIDF, InexpB2, DFRBM25, LGD, LemurTFIDF, InexpC2 may be used);
- a query expansion model (a model that consists in expanding the model by adding useful terms to the query 121 such as terms that are linked to the initial query 120, synonyms, etc... for example, the pseudo-relevance feedback models No, KL, Bo1, Bo2, KLCorrect, Information, KLComplete may be used);
- values of parameters of the above models. Parameters may include:

  - the inner parameters of the retrieval model (b parameter in BM25 model, c parameter in Language Model -based retrieval models, ...);
  - the inner parameters of the QE model (number of documents used in QE, number of added terms, minimum number of documents considered, ...).

The combination of the elements above results in a huge number of possible configurations. However, the invention relies on the use of a limited set of candidate configurations (for example, 5, 10, 20 or 50 candidate configurations may be stored).

The device 300 comprises at least one processing logic 340. According to various embodiments of the invention, a processing logic may be a processor operating in accordance with software instructions, a hardware configuration of the processor, or a combination thereof. It should be understood that any or all of the functions discussed herein may be implemented in a pure hardware implementation and/or by a processor operating in accordance with software instructions and/or by a processor operating in accordance with software instructions, and a configuration of a machine learning engine or neural network. A processing logic may also be a multicore processor executing operations in parallel, a series of processors, or a combination thereof. It should also be understood that any or all software instructions may be stored in a non-transitory computer-readable medium. The term "configuration of a processing logic" refers to any means (for example hardware configuration, software instructions, machine learning, training or neural network, or any other adaptation means or combination thereof) of adapting a processing logic to execute operations.

The processing logic 340 is configured 341 to select an IR search configuration according to the IR query. This consists in selecting an IR configuration that is expected to produce the best results according for the IR query that has been received.

The processing logic 341 is further configured 342 to trigger the search of the IR query using the selected IR search configuration. According to various embodiments of the invention, the device 300 may either be configured to execute itself the query, i.e actually searching the documents according to the IR search configuration, or to provide to a further device (for example a further server of the same farm) instructions to perform the IR search. Once the IR search is performed, an ordered list of output documents is created. This ordered list can thus be presented to the user, for example in the form of a web page, so that the user views the output documents of the IR search, starting from the first, which is expected to be the most relevant.

As mentioned above, one of the objectives of the invention is to use a configuration that provides good results for the vast majority of possible queries, while using a limited set of candidate configurations.

To this effect, the candidate IR search configurations in said set of candidate IR search configurations have been selected as the IR search configurations in a set of possible IR search configurations that maximize a gain function increasing with a reward function and decreasing with a risk function.

The set of possible IR search configurations defines the configurations that may be generated using a combination of parameters is huge there are many retrieval and query reformulation models which in turn have many parameters for which some can take continuous values. For example, the set of possible configurations may comprise any possible combination of the following parameters:

- IR model: BB2, BM25, DFree, DirichletLM, HiemstraILM, InB2, InL2, JsKLs, PL2, DFI0, XSqrAM, DLH13, DLH, DPH, IFB2, TFIDF, InexpB2, DFRBM25, LGD, LemurTFIDF, InexpC2;
- QE model: No, KL, Bo1, Bo2, KLCorrect, Information, KLComplete;
- Number of documents: 2, 5, 10, 20, 50, 100;
- Number of added terms: 2, 5, 10, 15, 20;
- Minimum number of documents used: 2, 5, 10, 20, 50.

The parameters above provide more than 20,000 possible configurations but the possibilities are even larger. Many configurations are redundant in the sense they would lead to similar system performance thus some can be easily rejected as candidate configurations and reversely some configurations should be kept because they will make a big difference in performance on some of the queries. In order to select the best set of candidates, a gain function is applied to the possible configurations. The gain function is a function that assigns to each of the possible configurations a score. The possible configurations obtaining the highest scores are thus selected to belong to the set of candidate configurations.

As noted above, the gain function increases with a reward function. The reward function is a function that defines a potential increase of efficiency provided by a configuration. Therefore, the more the configuration is expected to increase the search performance, the higher the reward function (and thus the gain function will be).

The gain function also decreases with a risk function. The risk function defines the possible loss of performance of the information retrieval when a configuration is used, compared to a baseline configuration. Therefore, if a configuration performs poorly on a large number of queries, the risk function will become high, and even if it performs well on the other queries, the overall gain function will not be very high.

Therefore, are selected as candidate configurations, possible configurations that in the same time provide large gains of performances for a number of queries as high as possible, and limits the loss of performances for the queries on which they do not perform very well. Therefore, even with a limited number of configurations, it is possible to perform very well on a large number of queries, and avoid whenever possible very bad performances for any possible query. Therefore, the overall performances of the configurations will be very high with a limited number of configurations.

In a number of embodiments the reward function and the risk functions are calculated based on comparisons between performance of possible configurations and reference configurations on a query training set $Q_T$.

The query training set $Q_T$ comprises a number of queries on which the performances of possible configurations and reference configurations can be calculated.

The risk function can for example be calculated, for a possible configuration, as the sum, for each query of the query training set, of a comparison between the performance of a reference configuration and of the possible configuration divided by the size of the query training set, when said comparison is positive if the reference configuration performs better than the possible configuration.

Thus, the risk function depends of the overall loss of effectiveness over the queries of the query training set.

The risk function can for example be calculated as the sum, for each query of the query training set, of the maximum between 0 and the difference between the performance of the reference configuration, and the performance of a possible configuration, divided by the number of queries in the training set:

$$\mathrm{Eff}_{Risk}\left(c_j\right) = \frac{1}{|T|} \sum_{q_i \in Q_T} \max\left(0, p(c_r, q_i) - p(c_j, q_i)\right)$$

*(Equation 1)*

Wherein:

- j is the index of a possible configuration $c_j$;
- |T| is the number of queries in the query training set $Q_T$;
- p(c,q) represents the performance of a configuration c for the query q. The performance may be calculated using different performance metrics, such as: precision at 1,5,10 retrieved document, normalized discounted cumulative gain, etc.;
- $c_r$ is a reference configuration;
- i is the index of a query $q_i$ of the training set.

The function $\mathrm{Eff}_{Risk}(c_j)$ therefore accumulates the loss of effectiveness over queries when the configuration $c_j$ is selected while the configuration $c_r$ would have been a better choice. It thus corresponds to the maximum possible risk. Interestingly, the function $\mathrm{Eff}_{Risk}$ is expressed as differences of performance using the same performance metrics. Therefore, the output of the risk function is consistent with the scale of the selected effectiveness function.

Other risk function may be used. For example, the risk function may be defined by:

$$\mathrm{Nbq}_{Risk}\left(c_j\right) = \frac{1}{|T|} \sum_{q_i \in Q_T} |p(c_r, q_i) - p(c_j, q_i) > 0|$$

*(Equation 2)*

Wherein |a > 0| = 1, and |a ≤ 0| = 1. Therefore, this function indicates the fraction of the queries of the training set, for which the reference configuration performed better than the possible configuration, and therefore indicates a risk of loss of performance.

Conversely, the reward function can be defined as the sum, for each query of the query training set, of a comparison between the performance of a possible configuration and of the candidate configuration divided by the size of the query training set, when said comparison is positive if the candidate configuration performs better than the reference configuration.

This reward function therefore accumulates the gain of selecting a candidate function rather than a reference function when the candidate function performs better.

For example, the reward function can be calculated as the sum, for each query of the query training set, of the maximum between 0 and the difference between a performance of a possible configuration, and the performance of the reference configuration, divided by the number of queries in the training set:

$$\mathrm{Eff}_{Reward}\big(c_j\big) = \frac{1}{|T|} \sum_{\mathrm{q}_i \epsilon \, Q_T} \max\Big(0, p\big(c_j, q_i\big) - p(c_r, q_i)\Big)$$

*(Equation 3)*

Alternatively, the reward function can indicate the fraction of the queries of the training set, for which the reference configuration performed better than the possible configuration, and therefore indicates a risk of loss of performance:

$$\mathrm{Nbq}_{Reward}\big(c_j\big) = \frac{1}{|T|} \sum_{\mathrm{q}_i \epsilon \, Q_T} \big|p\big(c_j, q_i\big) - p(c_r, q_i) > 0\big|$$

*(Equation 4)*

In each case, the possible configurations for which the gain functions are the highest can be selected as candidate configurations.

In a number of embodiments, the set of candidate configurations is built iteratively and, when at least one configuration is already present in the set, the risk and reward functions are defined, not by comparisons between the performances of a possible configuration and a reference configuration, but using comparisons between the performances of a possible configuration and the candidate configurations that are already present in the set.

Therefore, candidate configurations are iteratively added as the configurations that optimize the gain and minimize the loss of over the training set compared to the candidate configurations that are already present. Therefore, the candidate configurations of the set become complementary, and the overall ability of the set to comprise, for each query, a configuration with high performance is increased. It is therefore possible to obtain configurations with high performances for most of the queries, even with a limited set of configurations.

The set of candidate configurations is thus built over successive iterations. We will note below the iteration number as k, and the set of candidate configurations at the output of the iteration k as $S_k$. Therefore, at the iteration k, the gain function is calculated for possible configurations by comparing the performances of a possible configuration with the performances of candidate configurations in the set $S_{k-1}$ at the output of the preceding step k-1.

In a number of embodiments of the invention, the risk function is the sum, for each query of the query training set, of a comparison between the performances of the candidate configurations of the set of candidate configurations at the output of the preceding iteration $S_{k-1}$.and of the possible configuration divided by the size of the query training set, when said comparison is positive if at least one candidate configuration performs better than the possible configuration.

Thus, the risk function therefore represents the risk that a possible configuration provides reduced performances compared to at least one candidate configuration already present in the set.

In a number of embodiments of the invention, the comparison is a maximum between 0 and the maximum of the differences between the performances of each candidate configuration, and the performance of the possible configuration for a query. We therefore have the function $E_{RISK}(c_k, S_{k-1})$ of a possible configuration $c_k$ when the set of candidate configuration at the output of the preceding step is $S_{k-1}$ defined as:

$$E_{RISK}(c_k, S_{k-1}) = \frac{1}{|T|} \sum_{\mathrm{q}_i \epsilon \, Q_T} max\Big(0, \max_{c_j \epsilon S_{k-1}} \big(p\big(c_j, q_i\big) - p(c_k, q_i)\big)\Big)$$

*(Equation 5)*

This risk function defines the contribution of each query to the risk as either 0 if the possible configuration performs better for the query than each candidate configuration already present in the set, or as the maximum loss of performance between a candidate configuration in the set, and the possible configuration. The risk function can thus be considered as the cumulative decrease in effectiveness of the system if the configuration $c_k$ is chosen instead if the best configuration in $S_{k-1}$ for each of the training queries.

In a number of embodiments of the invention, the comparison is equal to 1 if at least one configuration in the set of candidate configurations performs better than the possible configurations and 0 otherwise. We therefore have:

$$N_{RISK}(c_k, S_{k-1}) = \frac{1}{|T|} \sum_{q_i \in Q_T} \left| \left( \max_{c_j \in S_{k-1}} p(c_j, q_i) - p(c_k, q_i) \right) > 0 \right|$$

*(Equation 6)*

With $|a>0| = 1$ if the condition is true, and 0 otherwise. Thus, the risk for adding the configuration $c_k$ in the set of candidate configurations is measured as the number of queries in the training set for which the effectiveness is lower for $c_k$ than for the best configuration in $S_{k-1}$, divided by the number of queries in the query training set.

In a number of embodiments of the invention, the reward function is the sum, for each query of the query training set, of a comparison between the performances of the candidate configurations of the set of candidate configurations at the output of the preceding iteration $S_{k-1}$ and of the possible configuration divided by the size of the query training set, when said comparison is positive if the possible configuration performs better than all the candidate configurations.

Thus, the reward function therefore represents the capacity of the possible configuration to increase the performance of all candidate configurations already present in the set for some of the queries.

In a number of embodiments of the invention, the comparison is a maximum between 0 and the difference between the performance of the possible configuration, and the maximum of the performances of each candidate configuration for a query. We therefore have the function $E_{REWARD}(c_k, S_{k-1})$ of a possible configuration $c_k$ when the set of candidate configuration at the output of the preceding step is $S_{k-1}$ defined as:

$$E_{REWARD}(c_k, S_{k-1}) = \frac{1}{|T|} \sum_{q_i \in Q_T} max \left( 0, p(c_k, q_i) - \max_{c_j \in S_{k-1}} p(c_j, q_i) \right)$$

*(Equation 7)*

This reward function defines the contribution of each query to the reward function as either 0 if at least one candidate configuration already present in the set performs better than the possible configuration, or as the difference between the performance of the possible configuration, and the maximum performance of candidate configurations in the set. The reward function can thus be considered as the cumulative gain in effectiveness of the system if the configuration $c_k$ is chosen instead if the best configuration in $S_{k-1}$ each time it performs better for each of the training queries.

In a number of embodiments of the invention, the comparison is equal to 1 if the possible configuration performs better than each of the candidate configurations in the set of candidate configurations, and 0 otherwise. We therefore have:

$$N_{REWARD}(c_k, S_{k-1}) = \frac{1}{|T|} \sum_{q_i \in Q_T} \left| \left( p(c_k, q_i) - \max_{c_j \in S_{k-1}} p(c_j, q_i) \right) > 0 \right|$$

*(Equation 8)*

With $|a>0| = 1$ if the condition is true, and 0 otherwise. Thus, the reward for adding the configuration $c_k$ in the set of candidate configurations is measured as the number of queries in the training set for which the effectiveness is higher for $c_k$ than for the best configuration in $S_{k-1}$, divided by the number of queries in the query training set.

When a reward and a risk functions have been defined, a gain function can be defined as an increasing function of the reward, and a decreasing function of the risk. For example, the gain can be defined as the reward minus the risk:

$$Gain(c_k, S_{k-1}) = Reward(c_k, S_{k-1}) - Risk(c_k, S_{k-1})$$
*(Equation 9)*

The gain may also be defined as a weighted difference between the reward and the gain, for example using weighting factors $\alpha$ and $\beta$:

$$Gain(c_k, S_{k-1}) = \alpha.Reward(c_k, S_{k-1}) - \beta.Risk(c_k, S_{k-1})$$
*(Equation 10)*

At each iteration, the configuration in the set of possible configuration that provides the highest gain can be selected, and added in the set of candidate configurations:

$$c_k^* = \underset{c_k \in R \backslash S_{k-1}}{argmax}\big(Gain(c_k, S_{k-1})\big)$$
*(Equation 11)*

$$S_k = S_{k-1} \cup \{c_k^*\}$$
*(Equation 12)*

Thus, at each iteration, the possible configuration that allows in the same time improving the performances of the already present candidate configurations, and reducing the risk of lowering the performances of the system is added.

This definition of the set of candidate configurations is generic enough, so that the processing logic 340 can be configured to select 341 the best configuration among the candidate configurations using any selection model while obtaining good results.

For example, the selection 341 of the configuration may be performed using a supervised machine learning engine which has been trained, using a training set of queries, to select a configuration according to the features of the queries.

Various machine learning engines may be used, such as machine learning engines of the type deep learning, Support Vector Machine, or Random Forest. Although each of the machine learning engines tested by the applicant provided good results, the applicant noted that Random Forest algorithms provided especially good results.

In a number of embodiments of the invention the selection 341 may take into account past queries and other pieces of information from connection logs such as the logs 180, or from a training data set obtained either by simulation, crowdsourcing, or any other mean. The training data set contains examples useful to train the selection 341.

The invention thus allows an accurate selection of the candidate configurations, among a vast number of possible configurations that allow obtaining good performances for IR retrieval while using a limited set of configurations.

The examples described above are given as illustrations of embodiments of the invention. They do not in any way limit the scope of the invention which is defined by the following claims.

## Claims

1. A device (300) comprising:

   - at least one input port (310) configured to receive an Information Retrieval (IR) query (320);
   - an access to at least one data storage (330) storing a set of candidate IR search configurations;
   - at least one processing logic (340) configured to:

     ∘ select (341) a search configuration in said set of candidate search configurations according to the query;
     ∘ trigger (342) the execution of the query using the selected search configuration;

wherein said the candidate search configurations in said set of candidate search configurations have been selected as the search configurations in a set of possible search configurations that maximize a gain function increasing with a reward function and decreasing with a risk function.

2. The device of claim 1, wherein the reward and the risk functions are calculated based on comparisons between performances of a possible configuration and a reference configuration on a query training set ($Q_T$).

3. The device of claim 2, wherein the risk function is the sum, for each query of the query training set, of a comparison between the performance of the reference configuration and of the possible configuration divided by the size of the query training set, when said comparison is positive if the reference configuration performs better than the possible configuration.

4. The device of claim 2, wherein the reward function is the sum, for each query of the query training set, of a comparison between the performance of the reference configuration and of the possible configuration divided by the size of the query training set, when said comparison is positive if the possible configuration performs better than the reference configuration.

5. The device of claim 1, wherein the candidate configurations are added to the set of candidate configurations over successive iterations, and the reward and risk functions are calculated by comparing the performances on a query training set ($Q_T$) of a possible configuration to the performances of the candidate configurations of the set of candidate configurations at the output of the preceding iteration ($S_{k-1}$).

6. The device of claim 5, wherein the risk function is the sum, for each query of the query training set, of a comparison between the performances of the candidate configurations of the set of candidate configurations at the output of the preceding iteration ($S_{k-1}$) and the performances of the possible configuration divided by the size of the query training set, wherein said comparison is positive if at least one candidate configuration performs better than the possible configuration.

7. The device of claim 6, wherein the comparison is a maximum between 0 and the maximum of the differences between the performances of each candidate configuration, and the performance of the possible configuration for a query of the query training set.

8. The device of claim 6, wherein the comparison is equal to 1 if at least one configuration in the set of candidate configurations performs better than the possible configuration, and 0 otherwise.

9. The device of claim 5, wherein the reward function is the sum, for each query of the query training set, of a comparison between the performances of the candidate configurations of the set of candidate configurations at the output of the preceding iteration ($S_{k-1}$) and of the possible configuration divided by the size of the query training set, when said comparison is positive if the possible configuration performs better than all the candidate configurations.

10. The device of claim 9, wherein the comparison is a maximum between 0 and the difference between the performance of the possible configuration, and the maximum of the performances of each candidate configuration for a query.

11. The device of claim 9, wherein the comparison is equal to 1 if at least one configuration in the set of candidate configurations performs better than the possible configuration, and 0 otherwise.

12. The device of one of claims 1 to 11, wherein the set of possible configurations comprises all the possible combinations a set of parameter values comprising one or more of:

> - an IR model selected in a list comprising one or more of BB2, BM25, DFree, DirichletLM, HiemstraLM, InB2, InL2, JsKLs, PL2, DFI0, XSqrAM, DLH13, DLH, DPH, IFB2, TFIDF, InexpB2, DFRBM25, LGD, LemurTFIDF, InexpC2;
> - a QE model selected in a list comprising one or more of No, KL, Bo1, Bo2, KLCorrect, Information, KLComplete;
> - a number of documents used in QE selected in a list comprising one or more of the numbers 2, 5, 10, 20, 50, 100;
> - a number of expansion terms selected in a list comprising one or more of the numbers 2, 5, 10, 15, 2 0;
> - a minimum number of documents selected in a list comprising one or more of the numbers 2, 5, 10, 20, 50.

13. A method comprising:

- receiving an Information Retrieval (IR) query;
- selecting a search configuration in said a set of candidate IR search configurations according to the query;
- triggering the execution of the query using the selected search configuration;

wherein said the candidate search configurations in said set of candidate search configurations have been selected as the search configurations in a set of possible search configurations that maximize a gain function increasing with a reward function and decreasing with a risk function.

14. A computer program product comprising a non-transitory computer-readable storage medium, and a non-transitory computer-readable storage medium, causes the one or more processors to:

- receiving an Information Retrieval (IR) query;
- selecting a search configuration in said a set of candidate IR search configurations according to the query;
- triggering the execution of the query using the selected search configuration;

wherein said the candidate search configurations in said set of candidate search configurations have been selected as the search configurations in a set of possible search configurations that maximize a gain function increasing with a reward function and decreasing with a risk function.

FIG.1

FIG.2

FIG.3

Europäisches
Patentamt

European
Patent Office

Office européen
des brevets

**EUROPEAN SEARCH REPORT**

Application Number

EP 19 30 5984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/151495 A1 (BENNETT PAUL N [US] ET AL) 13 June 2013 (2013-06-13) <br> * figures 1, 3 * <br> * paragraph [0007] * <br> * paragraph [0020] * <br> * paragraph [0036] * <br> ----- | 1-14 | INV. <br> G06F16/33 |

TECHNICAL FIELDS
SEARCHED      (IPC)

G06F

The present search report has been drawn up for all claims

| Place of search | Date of completion of the search | Examiner |
|---|---|---|
| The Hague | 12 November 2019 | Coquil, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..................................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 30 5984

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2019

| Patent document cited in search report | Publication date | Patent family member(s) | Publication date |
|---|---|---|---|
| US 2013151495 A1 | 13-06-2013 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DEVEAUD, R. ; MOTHE, J. ; NIE, J. Y.** Learning to rank system configurations. *In Proceedings of the 25th ACM International on Conference on Information and Knowledge Management,* October 2016, 2001-2004

- **CROFT, W. B. ; METZLER, D. ; STROHMAN, T.** Search engines: Information retrieval in practice. Addison-Wesley, 2010, vol. 520